# EUROPEAN PATENT APPLICATION

(11) **EP 4 664 344 A1**
(43) Date of publication of application: **17.12.2025**
(21) Application number: 25167219.2
(22) Date of filing: 28.03.2025
(51) Int. Cl.: G06F 30/20, G06F 111/10

(54) **METHOD AND SYSTEM FOR BATTERY DROP SIMULATION**

(30) Priority: 11.06.2024 KR 20240075931
(71) Applicant: SAMSUNG SDI CO., LTD., Yongin-si, Gyeonggi-do 17084 (KR)
(72) Inventor: NOH, Jungwoo, 17084 Yongin-si (KR); KIM, Seongseop, 17084 Yongin-si (KR); LEE, Wookjin, 17084 Yongin-si (KR)
(74) Representative: Marks & Clerk LLP

(57) **Abstract**

A battery drop simulation method including: generating, by at least one processor, a three-dimensional model including an adhesive member for a battery; receiving, by the at least one processor, information associated with the three-dimensional model; estimating, by the at least one processor, an adhesion coefficient of the adhesive member based on the information associated with the three-dimensional model; performing, by the at least one processor, a drop simulation of the three-dimensional model based on the information associated with the three-dimensional model, the adhesion coefficient, and drop condition information; and outputting, by the at least one processor, a drop simulation result of the drop simulation. The drop simulation result includes information about whether or not the adhesive member is separated due to a drop.

## Description

### BACKGROUND

### 1. Field

Aspects of embodiments of the present disclosure relate to a method and a system for a battery drop simulation.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

To ensure the reliability of the safety of the secondary batteries, various evaluations are being conducted on the secondary batteries. In particular, battery safety testing against a drop caused by an accident that may occur when using a portable electronic device or an electric vehicle may be an important consideration. However, it may be difficult to control environmental factors to ensure a continuity and a reproducibility of testing in physical property tests for a safety evaluation.

The above information disclosed in this Background section is for enhancement of understanding of the background of the present disclosure, and therefore, it may contain information that does not constitute related (or prior) art.

### SUMMARY

Embodiments of the present disclosure may be directed to a method and a system for a battery drop simulation.

These and other aspects and features of the present disclosure will be described in or will be apparent from the following description of embodiments of the present disclosure.

According to one or more embodiments of the present disclosure, a battery drop simulation method includes: generating, by at least one processor, a three-dimensional model including an adhesive member for a battery; receiving, by the at least one processor, information associated with the three-dimensional model; estimating, by the at least one processor, an adhesion coefficient of the adhesive member based on the information associated with the three-dimensional model; performing, by the at least one processor, a drop simulation of the three-dimensional model based on the information associated with the three-dimensional model, the adhesion coefficient, and drop condition information; and outputting, by the at least one processor, a drop simulation result of the drop simulation. The drop simulation result includes information about whether or not the adhesive member is separated due to a drop.

In an embodiment, the three-dimensional model may further include a pouch and a jelly roll; and the information associated with the three-dimensional model may include information associated with the pouch, information associated with the jelly roll, and information associated with the adhesive member.

In an embodiment, the estimating of the adhesion coefficient of the adhesive member may include: determining, by the at least one processor, a preliminary adhesion coefficient of the adhesive member; performing, by the at least one processor, a simulation analysis of the preliminary adhesion coefficient; and determining, by the at least one processor, the adhesion coefficient based on the simulation analysis.

In an embodiment, the determining of the adhesion coefficient may include determining, by the at least one processor, the preliminary adhesion coefficient to be the adhesion coefficient of the adhesive member if a result of the simulation analysis is less than a threshold.

In an embodiment, the determining of the adhesion coefficient may include changing, by the at least one processor, the preliminary adhesion coefficient if a result of the simulation analysis is greater than or equal to a threshold.

In an embodiment, the adhesion coefficient may include a normal failure stress coefficient and a shear failure stress coefficient.

In an embodiment, the drop condition information may include drop height information, drop angle information, adhesive force information associated with the adhesive member, and shape information of the adhesive member.

In an embodiment, the drop height information, the drop angle information, and the shape information of the adhesive member may be fixed values; and the performing of the drop simulation of the three-dimensional model may include evaluating, by the at least one processor, whether or not the adhesive member is separated according to a change in the adhesive force information associated with the adhesive member.

In an embodiment, the adhesive force information associated with the adhesive member may include first adhesive force information associated with a first area of the adhesive member, and second adhesive force information associated with a second area of the adhesive member; and the first adhesive force information and the second adhesive force information may be different from each other.

In an embodiment, the drop height information, the adhesive force information associated with the adhesive member, and the shape information of the adhesive member may be fixed values; and the performing of the drop simulation of the three-dimensional model may include evaluating, by the at least one processor, whether or not the adhesive member is separated according to a change in the drop angle information.

In an embodiment, the drop height information, the drop angle information, and the adhesive force information associated with the adhesive member may be fixed values; and the performing of the drop simulation of the three-dimensional model may include evaluating, by the at least one processor, whether or not the adhesive member is separated according to a change in the shape information of the adhesive member.

In an embodiment, the drop simulation result may further include information on a deformed shape of the pouch due to a drop.

In an embodiment, the drop simulation result may further include stress information for each area of the pouch due to a drop.

In an embodiment, a computer-readable non-transitory recording medium may store instructions for executing the method on a computer.

According to one or more embodiments of the present disclosure, a device includes: a communication module; a memory; and at least one processor connected to the memory, and configured to execute instructions stored in the memory to cause the at least one processor to: generate a three-dimensional model including an adhesive member for a battery; receive information associated with the three-dimensional model; estimate an adhesion coefficient of the adhesive member based on the information associated with the three-dimensional model; perform a drop simulation of the three-dimensional model based on the information associated with the three-dimensional model, the adhesion coefficient, and drop condition information; and output a drop simulation result of the drop simulation. The drop simulation result includes information about whether or not the adhesive member is separated due to a drop.

In an embodiment, the three-dimensional model may further include a pouch and a jelly roll; and the information associated with the three-dimensional model may include information associated with the pouch, information associated with the jelly roll, and information associated with the adhesive member.

In an embodiment, to estimate the adhesion coefficient of the adhesive member, the instructions may further cause the at least one processor to: determine a preliminary adhesion coefficient of the adhesive member; perform a simulation analysis of the preliminary adhesion coefficient; and determine the adhesion coefficient based on the simulation analysis.

In an embodiment, the drop condition information may include drop height information, drop angle information, adhesive force information associated with the adhesive member, and shape information of the adhesive member.

In an embodiment, to perform the drop simulation of the three-dimensional model, the instructions may further cause the at least one processor to evaluate whether or not the adhesive member is separated according to a change in drop condition information.

In an embodiment, the drop simulation result may further include information on a deformed shape of the pouch due to a drop.

According to some embodiments of the present disclosure, a user may perform a simulation to test the safety of a battery. Thus, it may be possible to more easily secure a continuity and a reproducibility of a safety test. In addition, the user may freely change various variables through simulation to more conveniently identify whether or not an adhesive member is separated due to a drop of the battery.

According to some embodiments of the present disclosure, the user may more easily identify a deformed appearance of a pouch and stress values per area of the pouch based on the results of the drop simulation.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 shows a battery drop simulation method according to an embodiment of the present disclosure.
FIG. 2 is a schematic diagram showing a configuration in which an information processing system is connected to a plurality of user terminals to enable a communication for performing a battery drop simulation according to an embodiment of the present disclosure.
FIG. 3 is a block diagram showing an internal structure of a user terminal and an information processing system according to an embodiment of the present disclosure.
FIG. 4 illustrates a cross section of a three-dimensional model for a battery according to an embodiment of the present disclosure.
FIG. 5 is a flowchart illustrating a method for estimating an adhesion coefficient according to an embodiment of the present disclosure.
FIG. 6 is a schematic diagram showing a simulation analysis according to an embodiment of the disclosure.
FIG. 7 is a schematic diagram showing a drop simulation result according to an embodiment of the present disclosure.
FIG. 8 is a schematic diagram showing a drop simulation result according to an embodiment of the present disclosure.
FIG. 9 is a schematic diagram showing a drop simulation result according to an embodiment of the present disclosure.
FIG. 10 is a diagram showing a drop simulation result according to an embodiment of the present disclosure.
FIG. 11 is a flowchart illustrating a method according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, the terms 'module' and 'unit' may refer to a software component or a hardware component, and the 'module' or 'unit' may perform specific roles. However, the 'module' or 'unit' is not limited to software or hardware. A 'module' or 'unit' may reside on an addressable storage medium, and may drive one or more processors. Thus, as an example, a 'module' or 'unit' may include at least one of various suitable components, such as software components, object-oriented software components, class components, and task components, processes, functions, attributes, procedures, subroutines, program code segments, drivers, firmware, microcode, circuits, data, databases, data structures, tables, arrays, or variables. The components and modules or units may be combined with each other into a smaller number of larger ones, or may be divided into a larger number of smaller ones, while maintaining or substantially maintaining the same functionality.

According to an embodiment of the present disclosure, a 'module' or 'unit' may be implemented with a processor and a memory. The 'processor' may include a general-purpose processor, a central processing unit (CPU), a microprocessor, a digital signal processor (DSP), a controller, a microcontroller, a state machine, and/or the like. In some embodiments, the 'processor' may refer to an application-specific integrated circuit (ASIC), a programmable logic device (PLD), a field programmable gate array (FPGA), or the like. The 'processor' may refer to, for example, a combination of a DSP and a microprocessor, a combination of a plurality of microprocessors, a combination of one or more microprocessors coupled with a DSP core, or a combination of other processing devices. In addition, the term 'memory' may include any suitable electronic component capable of storing electronic information. The 'memory' may refer to various suitable kinds of processor-readable media, such as random access memory (RAM), read-only memory (ROM), non-volatile random access memory (NVRAM), programmable read-only memory (PROM), erasable-programmable read-only memory (EPROM), electrically erasable PROM (EEPROM), flash memory, magnetic or optical data storage, and/or registers. The memory may be in electronic communication with a processor if the processor can read information from the memory and/or write information to the memory. The memory integrated into a processor may be in electronic communication with the processor.

As used herein, the term 'system' may include, but is not limited to, at least one of a server device or a cloud device. For example, a system may be composed of one or more server devices. As another example, a system may be composed of one or more cloud devices. As another example, a system may operate together with a server device and a cloud device.

As used herein, the term 'display' may refer to any suitable display device associated with a computing device. For example, the term 'display' may refer to a specific display device that is controlled by the computing device, or is capable of displaying information/data provided by the computing device.

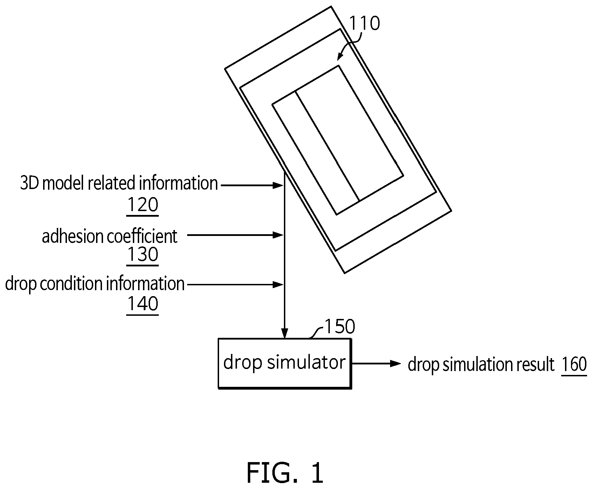

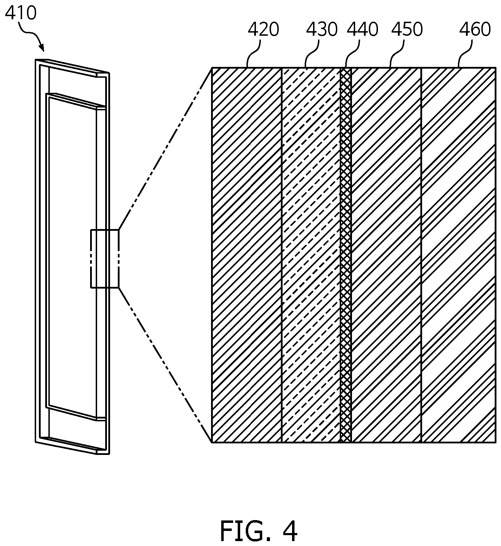

FIG. 1 shows a battery drop simulation method according to an embodiment of the present disclosure. In an embodiment, a processor (e.g., at least one processor of an information processing system) may generate a three-dimensional model (3D model) 110 for a battery. The three-dimensional model 110 may include an adhesive member, a pouch, a jelly roll, and the like. An example of the three-dimensional model 110 will be described in more detail below with reference to FIG. 4.

In an embodiment, the processor may receive 3D model related information 120. The 3D model related information 120 may include, but is not limited to, information associated with the pouch (e.g., a high-speed tensile strength of the pouch, a thickness thereof, and/or the like), information associated with the jelly roll (e.g., a stiffness of the jelly roll and/or the like), information associated with the adhesive member (e.g., a material of the adhesive member and/or the like), battery cell design information (e.g., a cell size, a weight, a thickness, a binder application area, and/or the like), information associated with a set in which the three-dimensional model 110 and the jig are coupled (e.g., connected to or attached to) each other (e.g., a shape of the set, a weight, a shape of a tape used in the set, and/or the like).

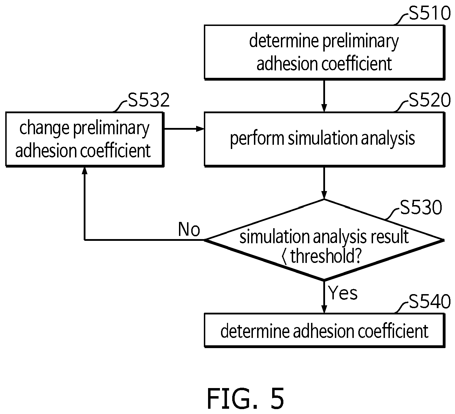

In an embodiment, the processor may estimate an adhesion coefficient 130 of the adhesive member based on the 3D model related information 120. In more detail, the processor may determine a preliminary adhesion coefficient of the adhesive member. In addition, the processor may perform a simulation analysis of the determined preliminary adhesion coefficient. Further, the processor may determine the adhesion coefficient 130 based on the simulation analysis. An example of a method for estimating the adhesion coefficient 130 will be described in more detail below reference to FIG. 5.

In an embodiment, a drop simulation of the 3D model 110 may be performed by inputting the 3D model related information 120, the estimated adhesion coefficient 130, and drop condition information 140 to a drop simulator 150. The drop condition information 140 may include drop height information, drop angle information, adhesive force information related to the adhesive member, shape information of the adhesive member, and an adhesion position of the adhesive member. As such, the drop simulator 150 may perform a drop simulation of the three-dimensional model 110 according to the drop condition information 140, and may generate a drop simulation result 160 associated with the simulation data. Then, the processor may obtain the drop simulation result 160 from the drop simulator 150, and may output it on the display. In this case, the drop simulation result 160 may include information on whether or not the adhesive member is separated due to the drop, information on a deformed shape of the pouch, and information on a stress per area of the pouch.

In this case, the user may perform a simulation to test the safety of the battery. Therefore, the user may more easily ensure a continuity and a reproducibility of the safety testing. In addition, the user may freely change various suitable variables through the simulation to more conveniently identify whether or not the adhesive member is separated due to the battery drop.

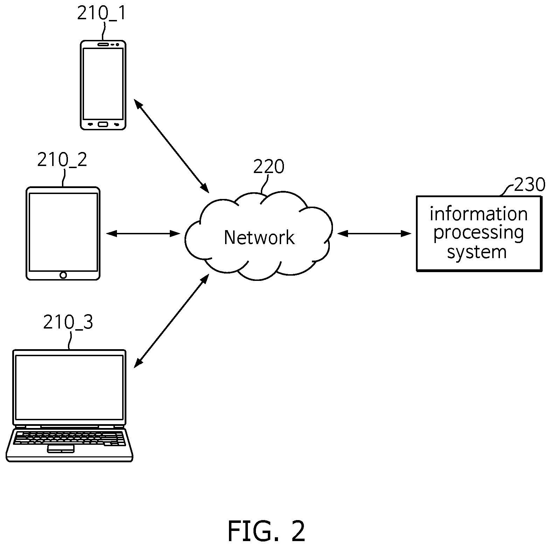

FIG. 2 is a schematic diagram showing a configuration in which an information processing system 230 is connected to a plurality of user terminals 210_1, 210_2, and 210_3 to enable a communication for performing a battery drop simulation according to an embodiment of the present disclosure. Referring to FIG. 2, multiple user terminals 210_1, 210_2, and 210_3 may be connected through a network 220 to the information processing system 230 that may provide a battery drop simulation service. The plurality of user terminals 210_1, 210_2, and 210_3 may include a terminal of a user who receives a battery drop simulation service.

In an embodiment, the information processing system 230 may include one or more server devices and/or databases that are capable of storing, providing, and executing computer-executable programs (e.g., downloadable applications) and data in connection with providing a battery drop simulation service, or one or more distributed computing devices and/or distributed databases based on cloud computing services.

The battery drop simulation service provided by the information processing system 230 may be delivered to the user through a battery drop simulation application, a web browser, a web browser extension installed on the plurality of user terminals 210_1, 210_2, and 210_3, and/or the like. For example, through the battery drop simulation application, the information processing system 230 may provide information corresponding to a request for an output of a battery drop simulation result received from the user terminals 210_1, 210_2, and 210_3, or to perform a corresponding processing.

The plurality of user terminals 210_1, 210_2, and 210_3 may communicate with the information processing system 230 through the network 220. The network 220 may enable communications between the plurality of user terminals 210_1, 210_2, and 210_3 and the information processing system 230. Depending on the installation environment, the network 220 may include, for example, a wired network such as Ethernet, a wired home network (e.g., a power line communication), a telephone line communication or a RS-serial communication, a wireless network such as a mobile communication network, a wireless LAN (e.g., WLAN), Wi-Fi, Bluetooth or ZigBee, or a suitable combination thereof. Any suitable communication scheme may be used, and both a communication scheme utilizing communication networks that the network 220 may include (e.g., a mobile communication network, a wired Internet, a wireless Internet, a broadcasting network, a satellite network, and/or the like) and a communication scheme utilizing short-range wireless communication between the user terminals 210_1, 210_2, and 210_3 may be used.

In FIG. 2, a mobile phone terminal 210_1, a tablet terminal 210_2, and a PC terminal 210_3 are shown as representative examples of the user terminals, but the present disclosure is not limited thereto, and the user terminals 210_1, 210_2, and 210_3 may include any suitable computing device that is capable of wired and/or wireless communications, and is capable of installing and executing a battery drop simulation application or a web browser. For example, the user terminals may include an AI speaker, a smartphone, a mobile phone, a navigation aid, a computer, a laptop, a digital broadcasting terminal, a personal digital assistant (PDA), a portable multimedia player (PMP), a tablet PC, a game console, a wearable device, an Internet-of-things (IoT) device, a virtual reality (VR) device, an augmented reality (AR) device, and/or a set-top box. In addition, while in FIG. 2 three user terminals 210_1, 210_2, and 210_3 are shown as communicating with the information processing system 230 through the network 220, the present disclosure is not limited thereto, and a different number of user terminals may be configured to communicate with the information processing system 230 over the network 220.

In FIG. 2, a configuration in which a user request (e.g., a request for an output of a battery drop simulation result) is transferred to the information processing system 230 through the user terminals 210_1, 210_2, and 210_3 is shown as an example, but the present disclosure is not limited thereto, and the user request may be provided to the information processing system 230 through an input device associated with the information processing system 230 without going through the user terminals 210_1, 210_2, and 210_3, such that the result of processing the user request (e.g., the battery drop simulation result) may be provided to the user through an output device (e.g., a display) associated with the information processing system 230.

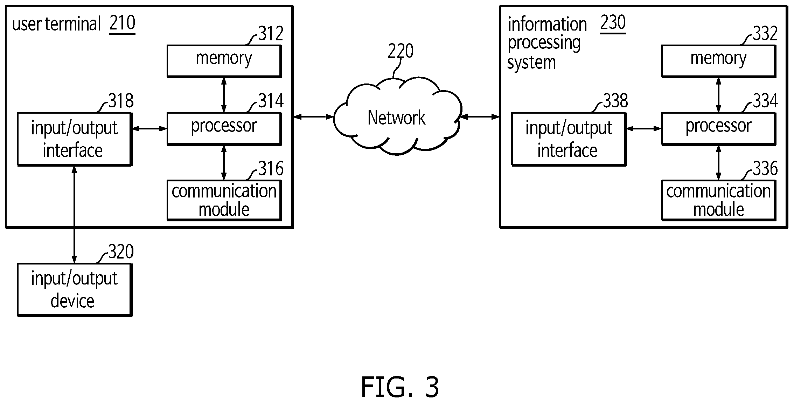

FIG. 3 is a block diagram showing an internal structure of a user terminal 210 and the information processing system 230 according to an embodiment of the present disclosure. The user terminal 210 may refer to any suitable computing device capable of executing an application and/or a web browser, and capable of wired/wireless communication. The user terminal 210 may include, for example, the mobile phone terminal 210_1, the tablet terminal 210_2, and/or the PC terminal 210_3 described above with reference to FIG. 2. Referring to FIG. 3, the user terminal 210 may include a memory 312, a processor 314, a communication module 316, and an input/output interface 318. The information processing system 230 may include a memory 332, a processor 334, a communication module 336, and an input/output interface 338. As shown in FIG. 3, the user terminal 210 and the information processing system 230 may exchange information and/or data with each other through the network 220 by using their communication modules 316 and 336. In addition, the input/output device 320 may input information and/or data to the user terminal 210 through the input/output interface 318, or may output information and/or data generated from the user terminal 210.

The memory 312 or 332 may include any suitable non-transitory computer-readable recording medium. According to an embodiment, the memory 312 or 332 may include a permanent mass storage device, such as a read only memory (ROM), a disk drive, a solid state drive (SSD), or a flash memory. As another example, a permanent mass storage device, such as a ROM, a SSD, a flash memory, or a disk drive may be included in the user terminal 210 and/or in the information processing system 230 as a separate permanent storage device that is distinct from the memory. In addition, the memory 312 or 332 may store an operating system and at least one program code.

The software components may be loaded from a computer-readable recording medium separate from the memory 312 or 332. The separate computer-readable recording medium may include a recording medium directly connectable to the user terminal 210 or the information processing system 230, and may include, for example, a computer-readable recording medium, such as a floppy drive, a disk, a tape, a DVD/CD-ROM drive, or a memory card. As another example, software components may be loaded onto the memory 312 or 332 through the communication module 316 or 336 other than a computer-readable recording medium. For example, at least one program may be loaded onto the memory 312 or 332 based on a computer program installed by files provided over the network 220 by developers, or a file distribution system that distributes installation files for applications.

The processor 314 or 334 may process instructions of a computer program by performing basic arithmetic, logic, and input/output operations. The instructions may be provided to the processor 314 or 334 by the memory 312 or 332 or the communication module 316 or 336. For example, the processor 314 or 334 may execute received instructions according to a program code stored in a recording device, such as the memory 312 or 332.

The communication modules 316 and 336 may provide a configuration or a function for the user terminal 210 and the information processing system 230 to communicate with each other through the network 220, and may provide a configuration or a function for the user terminal 210 and/or the information processing system 230 to communicate with other user terminals or other systems (e.g., a separate cloud system). For example, a request or data (e.g., a battery drop simulation output request) generated by the processor 314 of the user terminal 210 according to a program code stored in a recording device, such as the memory 312, may be transmitted through the network 220 to the information processing system 230 under the control of the communication module 316. Similarly, a control signal or a command provided under the control of the processor 334 of the information processing system 230 may be transmitted through the communication module 336 over the network 220, and may be received by the user terminal 210 through the communication module 316 of the user terminal 210.

The input/output interface 318 may provide an interface with the input/output device 320. As an example, input devices may include a suitable device, such as a camera including an audio sensor and/or an image sensor, a keyboard, a microphone, or a mouse. Output devices may include a suitable device, such as a display, a speaker, or a haptic feedback device. As another example, the input/output interface 318 may be a means for interfacing with a device having structures or functions for performing input and output integrated into one, such as a touchscreen. For example, when the processor 314 of the user terminal 210 processes instructions of a computer program loaded onto the memory 312, a service screen or the like composed based on information and/or data provided by the information processing system 230 or another user terminal may be displayed on the display through the input/output interface 318. In FIG. 3, the input/output device 320 is shown as not being included in the user terminal 210, but the present disclosure is not limited thereto, and the input/output device 320 may be implemented as a single device with the user terminal 210. In addition, the input/output interface 338 of the information processing system 230 may be a means for interfacing with a device for input or output that is capable of being connected to or included in the information processing system 230. In FIG. 3, the input/output interface 318 or 338 is shown as a separate component from the processor 314 or 334, but the present disclosure is not limited thereto, and the input/output interface 318 or 338 may be included in the processor 314 or 334.

The user terminal 210 or the information processing system 230 may include more components than those described above with reference to FIG. 3. In an embodiment, the user terminal 210 may be implemented to include at least one of the input/output device 320 described above. In addition, the user terminal 210 may further include other components, such as a transceiver, a global positioning system (GPS) module, a camera, various sensors, and a database. For example, if the user terminal 210 is a smartphone, it may include those components generally included in a smartphone. For example, the user terminal 210 may be implemented to further include various suitable components, such as an acceleration sensor, a gyro sensor, a microphone module, a camera module, various physical buttons, buttons using a touch panel, input/output ports, and a vibrator for vibration.

While a program or application for the battery drop simulation service is running, the processor 314 may receive text, image, video, voice, and/or an action through suitable input devices, such as a touchscreen, keyboard, camera including an audio sensor and/or an image sensor, and a microphone connected to the input/output interface 318. The processor 314 may store the received text, image, video, voice, and/or action in the memory 312, or may provide the same to the information processing system 230 through the communication module 316 over the network 220.

The processor 314 of the user terminal 210 may manage, process, and/or store information and/or data received from the input/output device 320, another user terminal, the information processing system 230, and/or a plurality of external systems. The information and/or data processed by the processor 314 may be provided through the communication module 316 to the information processing system 230 over the network 220. The processor 314 of the user terminal 210 may transmit information and/or data through the input/output interface 318 to the input/output device 320 to output the same. For example, the processor 314 may output or display the received information and/or data to or on the screen associated with the user terminal 210.

The processor 334 of the information processing system 230 may manage, process, and/or store information and/or data received from the plurality of user terminals 210 and/or the plurality of external systems. The information and/or data processed by the processor 334 may be provided through the communication module 336 to the user terminal 210 over the network 220.

FIG. 4 illustrates a cross section of a three-dimensional model 410 for a battery according to an embodiment of the present disclosure. In an embodiment, the three-dimensional model 410 may include a jelly roll 420, a pouch 430 surrounding (e.g., around a periphery of) the jelly roll 420, and an adhesive member 450 attached to the pouch 430. An interface 440 between the pouch 430 and the adhesive member 450 may be a surface to which the adhesive force of the adhesive member 450 is applied, and may be related to the adhesion coefficient of the adhesive member 450. In addition, the pouch 430 may be connected to a jig 460 through the adhesive member 450.

In an embodiment, the adhesive member 450 may include a first adhesive member attached to the pouch 430, and a second adhesive member disposed between the first adhesive member and the jig 460. As an example, when the material of the pouch 430 and the material of the jig 460 are different from each other, the material of the first adhesive member and the material of the second adhesive member may be different from each other. For example, the material of the first adhesive member may be a material that adheres well to the material of the pouch 430, and the material of the second adhesive member may be a material that adheres well to the material of the first adhesive member and the material of the jig 460. In addition, at least one of the first adhesive member or the second adhesive member may be a double-sided adhesive member.

In FIG. 4, the thicknesses of the jelly roll 420, the pouch 430, the interface 440, the adhesive member 450, and the jig 460 are shown for convenience of illustration, but the present disclosure is not limited thereto, and the thicknesses may be variously modified depending on their materials.

FIG. 5 is a flowchart illustrating a method for estimating the adhesion coefficient according to an embodiment of the present disclosure. In an embodiment, the method for adhesion coefficient estimation may be performed by at least one processor (e.g., the processor 334 in FIG. 3). The method for adhesion coefficient estimation may start, and the processor may determine the preliminary adhesion coefficient of the adhesive member included in the three-dimensional model for the battery (S510). The adhesion coefficient may include a normal failure stress coefficient and a shear failure stress coefficient depending on a direction of the adhesion evaluation (e.g., in a direction perpendicular to or parallel to a surface of the adhesive member). In addition, the preliminary adhesion coefficient may be assumed to be a certain number.

Thereafter, the processor may perform a simulation analysis on the preliminary adhesion coefficient (S520). The simulation analysis may refer to a comparison and analysis between the adhesive force of the adhesive member evaluated in an experimental environment and the adhesive force of the adhesive member implemented in the simulation. As such, the processor may calculate a ratio of the adhesive force of the adhesive member evaluated in the experimental environment and the adhesive force of the adhesive member implemented in the simulation. For example, a peel-off test and lap-shear test may be performed to evaluate the adhesive force of the adhesive member in the experimental environment, but the test is not limited thereto.

Thereafter, the processor may determine whether or not the result of the simulation analysis (e.g., the difference between the adhesive force of the adhesive member evaluated in the experimental environment and the adhesive force of the adhesive member implemented in the simulation) is less than a threshold (e.g., a preset or predetermined threshold, for example, such as 5%) (S530). In other words, the processor may determine whether or not the adhesive force of the adhesive member implemented in the simulation sufficiently matches the adhesive force of the adhesive member evaluated in the experimental environment.

If (e.g., when) the result of the simulation analysis is greater than or equal to the threshold, the processor may change the preliminary adhesion coefficient (S532). Additionally, the processor may perform a simulation analysis for the changed preliminary adhesion coefficient. This process may be repeated until the result of the simulation analysis is less than the threshold (e.g., YES at S530). If (e.g., when) the result of the simulation analysis is less than the threshold, the processor may determine the preliminary adhesion coefficient to be the adhesion coefficient of the adhesive member to be included in the three-dimensional model (S540).

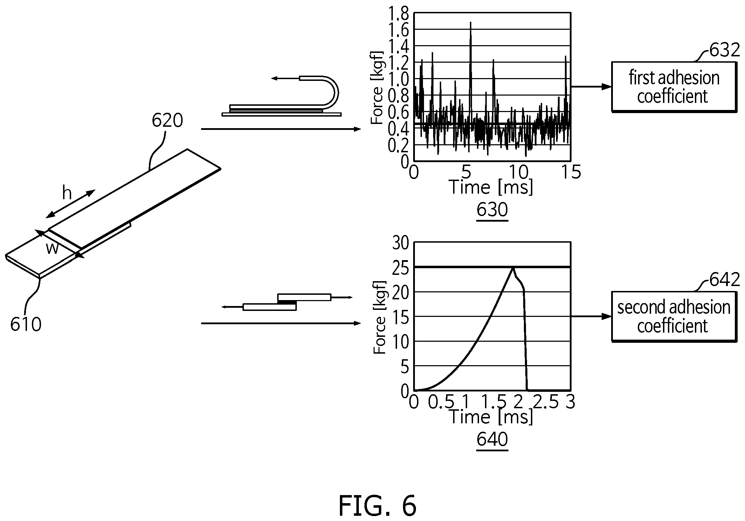

FIG. 6 is a schematic diagram showing a simulation analysis according to an embodiment of the disclosure. In an embodiment, the processor (e.g., the processor 334 in FIG. 3) may determine a preliminary adhesion coefficient of the adhesive member 620. In addition, the processor may perform a simulation analysis of the preliminary adhesion coefficient to determine the adhesion coefficient of the adhesive member 620.

In an embodiment, the processor may receive adhesive force information of the adhesive member 620 evaluated in an experimental environment to perform the simulation analysis. For example, the adhesive member 620 may be attached to a specific area (w*h) of the pouch 610, to evaluate the adhesive force of the adhesive member 620. In this case, the horizontal length (w) and vertical length (h) of the specific area (w*h) may be variously modified as needed or desired. In addition, the vertical adhesive force of the adhesive member 620 may be calculated using a peel-off test or the like. Further, the surface-direction adhesive force of the adhesive member 620 may be calculated using a lap-shear test or the like.

A first graph 630 illustrates an example showing the vertical adhesive force of the adhesive member 620 evaluated in an experimental environment. In an embodiment, the processor may input the average vertical adhesive force of the adhesive member 620 evaluated in the experimental environment and the preliminary adhesion coefficient, and may compare them with an average vertical adhesive force of the adhesive member 620 implemented in the simulation. If (e.g., when) the comparison result is less than a threshold (e.g., a preset or predetermined threshold, for example, such as 5%), the processor may determine the preliminary adhesion coefficient to be the first adhesion coefficient 632 associated with the vertical adhesive force of the adhesive member 620. In other words, the first adhesion coefficient 632 may be a normal failure stress coefficient.

A second graph 640 illustrates an example showing the surface-direction adhesive force of the adhesive member 620 evaluated in an experimental environment. In an embodiment, the processor may input the maximum surface-direction adhesive force of the adhesive member 620 evaluated in the experimental environment and the preliminary adhesion coefficient, and compare them with the maximum surface-direction adhesive force of the adhesive member 620 implemented in the simulation. If (e.g., when) the comparison result is less than a threshold (e.g., a preset or predetermined threshold, for example, such as 5%), the preliminary adhesion coefficient may be determined to be the second adhesion coefficient 642 associated with the surface-direction adhesive force of the adhesive member 620. In other words, the second adhesion coefficient 642 may be a shear failure stress coefficient.

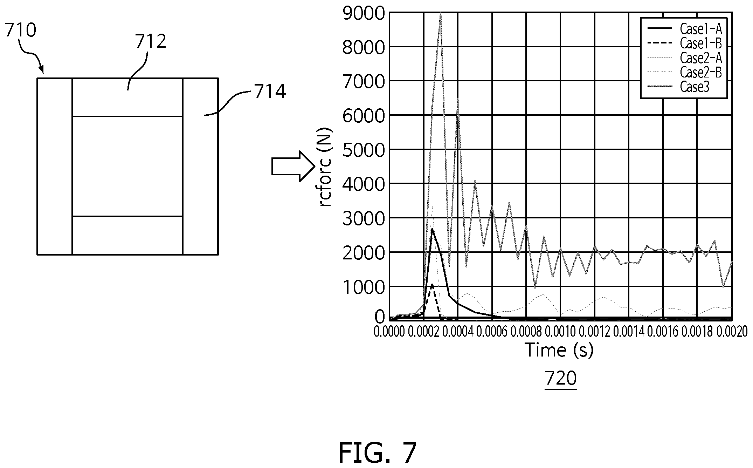

FIG. 7 is a schematic diagram showing a drop simulation result according to an embodiment of the present disclosure. In an embodiment, the drop condition information may include drop height information, drop angle information, adhesive force information associated with the adhesive member, and shape information of the adhesive member. The drop height information, the drop angle information, and the shape information of the adhesive member may be fixed values. In this case, an effect due to the adhesive force of the adhesive member may be identified through a drop simulation.

In an embodiment, the processor (e.g., the processor 334 in FIG. 3) may evaluate whether or not the adhesive member is separated according to a change in the adhesive force information associated with the adhesive member. The adhesive force information associated with the adhesive member may include adhesive component information, adhesive size information, and adhesive density information of the adhesive member. In more detail, an adhesive member may be attached to a target object 710 in the simulation. In this case, the adhesive of the adhesive member may be applied in the form of dots at regular intervals. As another example, the adhesive of the adhesive member may be applied to all areas (e.g., a perfect bond). In addition, the adhesive force information associated with the adhesive member may include first adhesive force information associated with a first area 712 of the adhesive member, and second adhesive force information associated with a second area 714 of the adhesive member. The first adhesive force information and the second adhesive force information may be different from each other. Whether or not the adhesive member is separated according to the adhesive force of the adhesive member may be indicated as shown in Table 1 below.

**Table 1:**

| | Case 1 | Case 2 | Case 3 |
|---|---|---|---|
| First area (diameter of adhesive) | □1.2 mm | □1.2 mm | Perfect Bond |
| Second area (diameter of adhesive) | □0.7 mm | □0.8 mm | Perfect Bond |
| Result | NG | OK | OK |

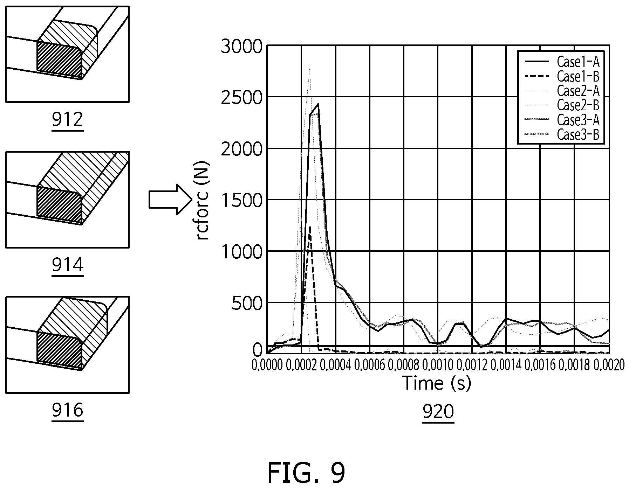

Table 1 shows whether or not the adhesive member is separated according to the adhesive force of the adhesive member when the adhesive member shape is fixed (e.g., a first shape 912 described in more detail below with reference to FIG. 9), the drop height is 1.48 m, and the drop angle is 0°. Referring to Table 1, the adhesive force of the adhesive member varies depending on the difference in diameter of the adhesive applied to the second area 714, and accordingly, it may be identified through a drop simulation whether or not the adhesive member of the target object 710 is separated. In addition, the adhesive force (e.g., a contact force) according to the adhesive force, the adhesive area, and time in each of these cases may be identified through the graph 720.

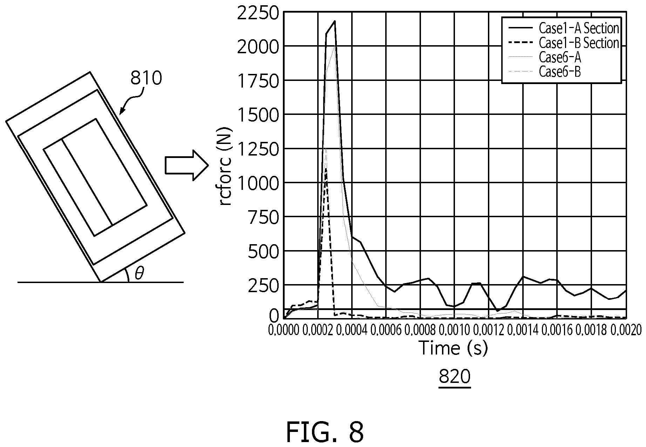

FIG. 8 is a schematic diagram showing a drop simulation result according to an embodiment of the present disclosure. In an embodiment, the drop condition information may include drop height information, drop angle information, adhesive force information associated with the adhesive member, and shape information of the adhesive member. The drop height information, the adhesive force information associated with the adhesive member, and the shape information of the adhesive member may be fixed values. In this case, an effect due to the drop angle of the three-dimensional model 810 may be identified through a drop simulation.

In an embodiment, the processor (e.g., the processor 334 in FIG. 3) may evaluate whether or not the adhesive member is separated according to a change in the drop angle information. In more detail, the processor may determine through a simulation whether or not the adhesive member is separated according to the angle θ formed between the falling three-dimensional model 810 and the ground. Whether or not the adhesive member is separated according to the drop angle θ may be indicated as shown in Table 2 below.

**Table 2:**

| | Case 1 | Case 2 | Case 3 | Case 4 | Case 5 | Case 6 |
|---|---|---|---|---|---|---|
| Drop angle (°) | 0 | 26 | -26 | 90 | -90 | 180 |
| Result | OK | OK | OK | OK | OK | NG |

Table 2 shows whether or not the adhesive member is separated according to the adhesive force of the adhesive member when the adhesive member shape is fixed (e.g., the first shape 912 to be described in more detail below with reference to FIG. 9), the drop height is 1.4 m, the diameter of the adhesive applied to the first area 712 described above with reference to FIG. 7 is 1.2 mm, and the diameter of the adhesive applied to the second area 714 is 0.7 mm. Referring to Table 2, the impact applied to the three-dimensional model 810 varies depending on the drop angle θ of the three-dimensional model 810, and accordingly, it may be identified through the drop simulation whether or not the adhesive member of the three-dimensional model 810 is separated. In addition, the adhesive force (e.g., a contact force) according to the angle, adhesive area, and time in each of case 1 and case 6 may be identified through the graph 820.

FIG. 9 is a schematic diagram showing a drop simulation result according to an embodiment of the present disclosure. In an embodiment, the drop condition information may include drop height information, drop angle information, adhesive force information associated with the adhesive member, and shape information of the adhesive member. The drop height information, the drop angle information, and the adhesive force information associated with the adhesive member may be fixed values. In this case, an effect due to the shape information of the adhesive member may be identified through a drop simulation.

In an embodiment, the processor (e.g., the processor 334 in FIG. 3) may evaluate whether or not the adhesive member is separated according to a change in the shape information of the adhesive member. In more detail, the processor may configure the shapes 912 to 916 of the plurality of adhesive members in advance, and may determine through a simulation whether or not the adhesive member is separated according to the shape of the adhesive member attached to the falling three-dimensional model. Whether or not the adhesive member is separated according to the shape of the adhesive member may be indicated as shown in Table 3 below.

**Table 3:**

| | Case 1 | Case 2 | Case 3 |
|---|---|---|---|
| Shape type | First shape | Second shape | Third shape |
| Result | OK | OK | OK |

Table 3 shows whether or not the adhesive member is separated according to the shape of the adhesive member when the drop height is 1.4 m, the drop angle is 0°, the diameter of the adhesive applied to the first area 712 described above with reference to FIG. 7 is 1.2 mm, and the diameter of the adhesive applied to the second area 714 is 0.7 mm. Referring to Table 3, the impact applied to the three-dimensional model varies depending on the shape of the adhesive member attached to the three-dimensional model, and accordingly, it may be identified through the drop simulation whether or not the adhesive member of the three-dimensional object is separated. In addition, the adhesive force (e.g., a contact force) according to the shape of the adhesive member, adhesive area, and time may be identified through the graph 920.

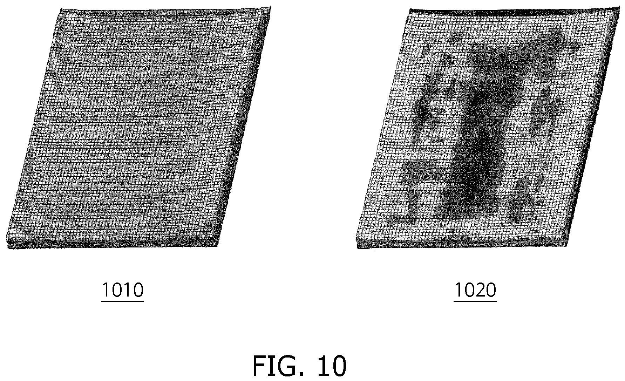

FIG. 10 is a diagram showing a drop simulation result according to an embodiment of the present disclosure. A first image 1010 is an example showing the shape of the pouch that is deformed due to a drop, and a second image 1020 is an example showing the stress per area in the pouch due to a drop. In an embodiment, the drop simulation result may include information about whether or not the adhesive member is separated due to a drop, as well as information about the shape of the pouch that is deformed due to a drop and information about a stress per area in the pouch due to a drop. Thus, the user may more easily identify the deformed appearance of the pouch and the stress values per area in the pouch through the results of the drop simulation.

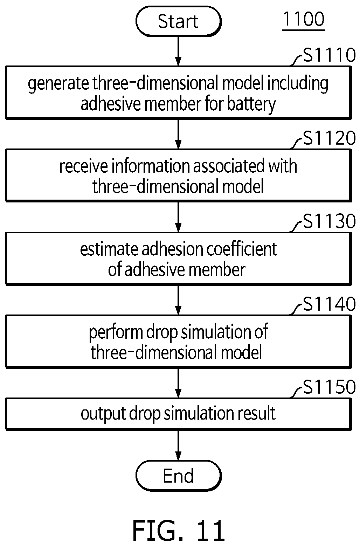

FIG. 11 is a flowchart illustrating a method 1100 according to an embodiment of the present disclosure. In an embodiment, the method 1100 may be performed by at least one processor. The method 1100 may start, and the processor may generate a three-dimensional model including an adhesive member for a battery (S1110). The three-dimensional model may further include a pouch and a jelly roll.

Thereafter, the processor may receive information associated with the three-dimensional model, or in other words, 3D model related information (S1120). The 3D model related information may include information related to the pouch, information related to the jelly roll, and information related to the adhesive member.

The processor may estimate the adhesion coefficient of the adhesive member based on the 3D model related information (S1130). In more detail, the processor may determine the preliminary adhesion coefficient of the adhesive member. Additionally, the processor may perform a simulation analysis of the determined preliminary adhesion coefficient. Then, the processor may determine the adhesion coefficient based on the simulation analysis. The adhesion coefficient may include a normal failure stress coefficient and a shear failure stress coefficient.

Based on the 3D model related information, the adhesion coefficient, and the drop condition information, the processor may perform a drop simulation of the three-dimensional model (S1140). In addition, the processor may output the drop simulation result (S1150). The drop condition information may include drop height information, drop angle information, adhesive force information associated with the adhesive member, and shape information of the adhesive member. Additionally, the drop simulation result may include information about whether or not the adhesive member is separated due to a drop.

In an embodiment, if (e.g., when) the result of the simulation analysis is less than a threshold (e.g., a preset or predetermined threshold), the processor may determine the preliminary adhesion coefficient to be the adhesion coefficient of the adhesive member. As another example, if (e.g., when) the result of the simulation analysis is greater than or equal to the threshold, the processor may change the preliminary adhesion coefficient.

In an embodiment, the drop height information, the drop angle information, and the shape information of the adhesive member may be fixed values. In this case, the processor may evaluate whether or not the adhesive member is separated due to a change in the adhesive force information associated with the adhesive member. The adhesive force information associated with the adhesive member may include first adhesive force information associated with a first area of the adhesive member, and second adhesive force information associated with a second area of the adhesive member. Additionally, the first adhesive force information and the second adhesive force information may be different from each other.

In an embodiment, the drop height information, the adhesive force information associated with the adhesive member, and the shape information of the adhesive member may be fixed values. In this case, the processor may evaluate whether or not the adhesive member is separated due to a change in the drop angle information.

In an embodiment, the drop height information, the drop angle information, and the adhesive force information associated with the adhesive member may be fixed values. In this case, the processor may evaluate whether or not the adhesive member is separated due to a change in the shape information of the adhesive member.

In an embodiment, the drop simulation result may further include information on the shape of the pouch that is deformed due to a drop. In addition, the drop simulation result may further include stress information for each area of the pouch due to a drop.

The method 1100 may be provided as a computer program stored in a computer-readable recording medium for execution on a computer. Media may be used to continuously store programs executable on a computer, or to temporarily store them for execution or download. Additionally, the media may be a variety of recording or storage means in the form of a single piece of hardware or a combination of several pieces of hardware, and the media may be directly connected to a computer system or may be distributed over a network. Examples of the media may include magnetic media, such as a hard disk, a floppy disk, and a magnetic tape, an optical recording media such as CD-ROM and DVD, a magneto-optical media such as a floptical disk, ROM, RAM, or a flash memory, which may store program instructions. Additionally, examples of other media may include recording or storage media managed by app stores that distribute applications, or by sites or servers that supply or distribute various other software.

The methods, operations, or techniques of the embodiments of the present disclosure may be implemented in various suitable ways. For example, these methods, operations, or techniques may be implemented in hardware, firmware, software, or a combination thereof. Those skilled in the art will understand that the various illustrative logical blocks, modules, circuits, and algorithm processes described in connection with the present disclosure may be implemented in electronic hardware, computer software, or a combination thereof. To clearly illustrate this mutual replacement between hardware and software, various illustrative components, blocks, modules, circuits, and processes have been described above generally in terms of their functionality. Whether such functionality is implemented in hardware or software depends on the specific application and design requirements imposed on the overall system. Those skilled in the art may implement the described functionality in various suitable ways for specific applications, but such implementations should not be construed as departing from the scope of the present disclosure.

In hardware implementation, the processing units used to perform the techniques may be implemented with one or more ASICs, DSPs, GPUs, digital signal processing devices (DSPDs), programmable logic devices (PLDs), field programmable gate arrays (FPGAs), processors, controllers, microcontrollers, microprocessors, electronic devices, other electronic units designed to perform the functions described in this disclosure, computers, or a combination thereof.

Thus, the various example logical blocks, modules, and circuits described in connection with the present disclosure may be implemented with or performed by general-purpose processors, DSPs, ASICs, FPGAs, programmable logic devices, discrete gates, transistor logics, discrete hardware components, or any combination thereof designed to perform the functions described herein. A general-purpose processor may be a microprocessor, but alternatively, the processor may be any processor, controller, microcontroller, or state machine. The processors may also be implemented as a combination of computing devices, such as a DSP and a microprocessor, a plurality of microprocessors, one or more microprocessors in conjunction with a DSP core, or any other configurations.

In firmware and/or software implementation, the techniques may be implemented as instructions stored in a computer-readable medium such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), or magnetic or optical data storage device. The instructions may be executable by one or more processors, and may cause the processor(s) to perform certain aspects of the functionality described in the present disclosure.

When implemented in software, the techniques may be stored in or transmitted through computer-readable media as one or more instructions or code. The computer-readable media include both computer storage media and communication media by including any media that facilitate transfer of a computer program from one place to another. The storage media may be any available media that can be accessed by a computer. By way of non-limiting examples, these computer readable media may include RAM, ROM, EEPROM, CD-ROM or other optical disk storage, magnetic disk storage or other magnetic storage devices, or any other media that may be used to transport or store desired program codes in the form of instructions or data structures and may be accessed by a computer. In addition, random access may be suitably made to computer-readable media.

For example, if software is transmitted from a website, server, or other remote source by using coaxial cable, fiber optic cable, twisted pair cable, digital subscriber line (DSL), or wireless technologies such as infrared ray, radio wave, and microwave, these coaxial cable, fiber optic cable, twisted pair cable, digital subscriber line, or wireless technologies such as infrared ray, radio wave, and microwave may be included in the definition of media. As used herein, disks and discs include CD, laser disc, optical disc, digital versatile disc (DVD), floppy disk, and Blu-ray disc, where disks usually reproduce data magnetically, whereas discs reproduce data optically using lasers. Combinations of the above ones should also be included in the scope of computer-readable media.

Software modules may be configured to reside in RAM memory, flash memory, ROM memory, EPROM memory, EEPROM memory, registers, hard disk, removable disk, CD-ROM, or any other form of well-known storage medium. An example storage medium may be coupled to a processor so that the processor may read information from or write information to the storage medium. The processor and storage medium may be present within an ASIC. The ASIC may be present in a user terminal. Alternatively, the processor and storage medium may be present as separate components in the user terminal.

Although the above-described embodiments have been described as utilizing aspects of the subject matter disclosed herein on one or more standalone computer systems, the disclosure is not limited thereto and may also be implemented in conjunction with any computing environment such as a network or distributed computing environment. Furthermore, aspects of the subject matter of this disclosure may be implemented with multiple processing chips or devices, and storage may be similarly effected across the multiple devices. These devices may include PCs, network servers, and portable devices.

Although the present disclosure has been described above with respect to embodiments thereof, the present disclosure is not limited thereto. Various modifications and variations can be made thereto by those skilled in the art within the context of the present disclosure and the equivalent scope of the appended claims.

### DESCRIPTION OF SOME REFERENCE SYMBOLS

- 110:: three-dimensional model
- 120:: 3D model related information
- 130:: adhesion coefficient
- 140:: drop condition information
- 150:: drop simulator
- 160:: drop simulation result

## Claims

1. A battery drop simulation method (1100), comprising:
generating (S1110), by at least one processor, a three-dimensional model (110, 410) comprising an adhesive member (450) for a battery;
receiving (S1120), by the at least one processor, information (120) associated with the three-dimensional model (110, 410);
estimating (S1130), by the at least one processor, an adhesion coefficient (130) of the adhesive member (450) based on the information associated with the three-dimensional model (110, 410);
performing (S1140), by the at least one processor, a drop simulation of the three-dimensional model (110, 410) based on the information (120) associated with the three-dimensional model, the adhesion coefficient (130), and drop condition information (140); and
outputting (S1150), by the at least one processor, a drop simulation result (160) of the drop simulation,
wherein the drop simulation result (160) comprises information about whether or not the adhesive member (450) is separated due to a drop.

2. The battery drop simulation method as claimed in claim 1, wherein:
the three-dimensional model (110, 410) further comprises a pouch (430) and a jelly roll (420); and
the information (120) associated with the three-dimensional model (110, 410) comprises information associated with the pouch (430), information associated with the jelly roll (440), and information associated with the adhesive member (450).

3. The battery drop simulation method as claimed in claim 1 or claim 2, wherein the estimating (S1130) of the adhesion coefficient (130) of the adhesive member (450) comprises:
determining (S510), by the at least one processor, a preliminary adhesion coefficient of the adhesive member (450);
performing (S520), by the at least one processor, a simulation analysis of the preliminary adhesion coefficient; and
determining, by the at least one processor, the adhesion coefficient (130) based on the simulation analysis.

4. The battery drop simulation method as claimed in claim 3, wherein the determining of the adhesion coefficient comprises determining (S540), by the at least one processor, the preliminary adhesion coefficient to be the adhesion coefficient (130) of the adhesive member (450) if a result of the simulation analysis is less than a threshold.

5. The battery drop simulation method as claimed in claim 3 or claim 4, wherein the determining of the adhesion coefficient comprises changing (S532), by the at least one processor, the preliminary adhesion coefficient if a result of the simulation analysis is greater than or equal to a threshold.

6. The battery drop simulation method as claimed in any preceding claim, wherein the adhesion coefficient (130) comprises a normal failure stress coefficient and a shear failure stress coefficient.

7. The battery drop simulation method as claimed in any preceding claim, wherein the drop condition information (140) comprises drop height information, drop angle information, adhesive force information associated with the adhesive member (450), and shape information of the adhesive member (450).

8. The battery drop simulation method as claimed in claim 7, wherein:
the drop height information, the drop angle information, and the shape information of the adhesive member are fixed values; and
the performing (S1140) of the drop simulation of the three-dimensional model (110, 410) comprises evaluating, by the at least one processor, whether or not the adhesive member (450) is separated according to a change in the adhesive force information associated with the adhesive member (450).

9. The battery drop simulation method as claimed in claim 8, wherein:
the adhesive force information associated with the adhesive member (450) comprises first adhesive force information associated with a first area (712) of the adhesive member (450), and second adhesive force information associated with a second area (714) of the adhesive member (450); and
the first adhesive force information and the second adhesive force information are different from each other.

10. The battery drop simulation method as claimed in claim 7, wherein:
the drop height information, the adhesive force information associated with the adhesive member (450), and the shape information of the adhesive member are fixed values; and
the performing (S1140) of the drop simulation of the three-dimensional model (110, 410) comprises evaluating, by the at least one processor, whether or not the adhesive member (450) is separated according to a change in the drop angle information.

11. The battery drop simulation method as claimed in claim 7, wherein:
the drop height information, the drop angle information, and the adhesive force information associated with the adhesive member (450) are fixed values; and
the performing (S1140) of the drop simulation of the three-dimensional model (110, 410) comprises evaluating, by the at least one processor, whether or not the adhesive member (450) is separated according to a change in the shape information of the adhesive member (450).

12. The battery drop simulation method as claimed in any of claims 2-11, wherein the drop simulation result (160) further comprises information on a deformed shape of the pouch (430) due to a drop.

13. The battery drop simulation method as claimed in any of claims 2-12, wherein the drop simulation result (160) further comprises stress information for each area of the pouch (430) due to a drop.

14. A device comprising:
a communication module;
a memory; and
at least one processor connected to the memory, and configured to execute instructions stored in the memory to cause the at least one processor to:
generate a three-dimensional model (110, 410) comprising an adhesive member (450) for a battery;
receive information (120) associated with the three-dimensional model (110, 410);
estimate an adhesion coefficient (130) of the adhesive member (450) based on the information (120) associated with the three-dimensional model (110, 410);
perform a drop simulation of the three-dimensional model (110, 410) based on the information (120) associated with the three-dimensional model (110, 410), the adhesion coefficient (130), and drop condition information (140); and
output a drop simulation result (160) of the drop simulation,
wherein the drop simulation result (160) comprises information about whether or not the adhesive member (450) is separated due to a drop.

15. The device as claimed in claim 14, wherein:
the three-dimensional model (110, 410) further comprises a pouch (430) and a jelly roll (420); and
the information (120) associated with the three-dimensional model (110, 410) comprises information associated with the pouch (430), information associated with the jelly roll (440), and information associated with the adhesive member (450).
